(19) Europäisches Patentamt
European Patent Office
Office européen des brevets

(11) **EP 1 292 657 B1**

(12) **FASCICULE DE BREVET EUROPEEN**

(45) Date de publication et mention de la délivrance du brevet:
**23.07.2008 Bulletin 2008/30**

(21) Numéro de dépôt: **01947522.7**

(22) Date de dépôt: **19.06.2001**

(51) Int Cl.:
***C10L 5/44*** *(2006.01)*

(86) Numéro de dépôt international:
**PCT/FR2001/001905**

(87) Numéro de publication internationale:
**WO 2001/098438 (27.12.2001 Gazette 2001/52)**

(54) **UTILISATION D'UN CARBURANT SOLIDE DANS DES MOTEURS, DES CHAUDIERES OU DES FOURS**

VERWENDUNG VON FESTBRENNSTOFF IN MOTOREN, KESSELN UND ÖFEN

USE OF SOLID FUEL IN ENGINES, BOILERS AND OVENS

(84) Etats contractants désignés:
**AT BE CH CY DE DK ES FI FR GB GR IE IT LI LU MC NL PT SE TR**

(30) Priorité: **20.06.2000 FR 0007833**

(43) Date de publication de la demande:
**19.03.2003 Bulletin 2003/12**

(73) Titulaire: **Pourtout, Guillaume**
**75017 Paris (FR)**

(72) Inventeur: **Pourtout, Guillaume**
**75017 Paris (FR)**

(74) Mandataire: **Portal, Gérard et al**
**Cabinet Beau de Loménie**
**158, rue de l'Université**
**75340 Paris Cédex 07 (FR)**

(56) Documents cités:
**WO-A-81/03336**

• **CARDILLO P ET AL: "Dust explosions in the food industry." INDUSTRIA CONSERVE 73 (2) 135-144 1998 STAZIONE SPERIMENTALE PER I COMBUSTIBILI, VIALE A. DE GASPERI 3, 20097 SAN DONATO MILANESE, ITALY, XP000983094**
• **IMAI E ET AL: "Effect of physical properties of food particles on the degree of graininess perceived in the mouth." JOURNAL OF TEXTURE STUDIES 30 (1) 59-88 1999 SAITAMA STUDY CENTER, THE UNIV. OF THE AIR, 682-2 NISHIKI-CHO, OMIYA CITY, SAITAMA 331-0851, JAPAN, XP000981428**
• **IWUOHA C I ET AL: "Density and viscosity of cold flour pastes of cassava (Manihot esculenta Grantz), sweet potato (Ipomoea batatas L. Lam) and white yam (Dioscorea rotundata Poir) tubers as affected by concentration and particle size." CARBOHYDRATE POLYMERS 37 (1) 97-101 1998, XP004141138**
• **WASMUND R ET AL: "Brennwerte und Heizwerte fester Produkte der Lebensmittelindustrie und ihre Bedeutung für das Einschätzen der Gefahr von Staubexplosionen." ZUCKERINDUSTRIE 1978 FACHBEREICH LEBENSMITTELTECH. BIOTECH. DER TU BERLIN, SEESTRASSE 13, D-1000 BERLIN 65, vol. 103, no. 10, pages 856-860, XP000981410**

**Description**

L'invention concerne un carburant solide et un mélange combustible le contenant.

Les carburants les plus utilisés à l'heure actuelle pour produire de l'énergie, et en particulier pour une utilisation pour des moteurs à combustion interne, sont des carburants issus de l'industrie pétrolière ou gazière.

Cependant les ressources mondiales en produits pétroliers et gaziers s'épuisent et cela entraîne des problèmes d'approvisionnement et de coûts.

De plus, l'utilisation de ces sources de carburants pose de nombreux problèmes de pollution environnementale.

Pour pallier ce problème, on a proposé l'emploi de pots catalytiques et de filtres à particules ajoutant au coût de fabrication du véhicule ou autre équipement fonctionnant avec ce type de carburant.

On a alors proposé d'utiliser l'énergie nucléaire ou l'énergie solaire.

Cependant, cela pose des problèmes de pollution et de sécurité environnementales et leur utilisation dans les véhicules à moteur en particulier, les automobiles et les avions, se heurte à des problèmes de stockage, de transport et donc de coûts.

Par ailleurs, le risque d'explosion des poussières de grains de céréales dans les silos à grains est connu depuis de nombreuses années.

En effet, les grains de céréales produisent des poussières qui, au contact de l'air, sont fortement explosives. Cette forte explosivité des poussières de grains de céréales dans les silos a été expliquée par leur taille moyenne de particules qui est inférieure à environ 75 $\mu$m. Ainsi, lorsque ces poussières de grains de céréales sont mises en suspension dans une grande quantité d'air en présence de gaz issus de la fermentation des grains de céréales, le mélange poussières de grains de céréales, air et gaz de fermentation devient explosif.

Dans d'autres domaines techniques, il est connu que les farines ont un risque d'explosion, voir l'article de P. Cardillo et al. relatif à "Dust explosions in the food industry", publié dans Industria Conserve 73(2) 1998, pages 135-144 ; l'article de Wasmund et al. dans Zuckerindustrie 103 (1978), Nr. 10 pages 856-860, intitulé "Brennwerte und Heizwerte fester Produkte der Lebenmittelindustrie und ihre Bedeutung für das Einschätzen der Gefahr von Staubexplosionen". D'autre part, d'autres documents sont relatifs aux caractéristiques physiques des farines, voir l'article de Chinyere et al. dans "Carbohydrate polymers 37 (1998), pages 97-101, intitulé "Density and viscosity of cold flour pastes of cassava, sweet potato and white yarns tubers as effected by concentration and particle size", ou encore de l'article de K. Saito et al. dans le journal of texture studies 30 (1999) pages 59-88, intitulé "Effect of physical properties of food particles on the degree of graininess perceived in the mouth".

L'invention a pour but de fournir un carburant qui est une alternative aux carburants issus de l'industrie pétrolière, gazière, nucléaire ou solaire, dont le transport ou le stockage ne pose aucune difficulté, dont l'utilisation ne produit aucun rejet toxique et qui est facilement disponible et renouvelable.

L'invention concerne l'utilisation comme carburant solide d'au moins un constituant, telle que définie à la revendication 1 ou 2, ou dans les sous revendications 3 à 13.

A cet effet, l'invention propose un carburant solide contenant majoritairement au moins un constituant, qui contient principalement au moins un composé sélectionné dans le groupe consistant en l'amidon, le lactose, la cellulose, et leurs dérivés et au moins 15 % en poids de glucides par rapport au poids total du(des) constituant(s), le (les) constituant(s) étant sous la forme d'une poudre d'un diamètre moyen et d'un diamètre médian de particules supérieurs ou égaux à 150 $\mu$m, de préférence compris entre 150 et 500 $\mu$m.

De préférence, au moins environ 70 % en volume de ladite poudre est constitué de particules ayant un diamètre supérieur ou égal à 150 $\mu$m.

Selon un premier mode de réalisation du carburant de l'invention, celui-ci est composé en totalité dudit (desdits) au moins un constituant.

Un carburant solide particulièrement préféré de l'invention est un carburant dans lequel le(s)dit(s) au moins un constituant est(sont) sélectionné(s) dans le groupe consistant en une farine de céréales, la farine de coton, la farine de soja, la farine de pomme de terre, la farine de manioc ou tapioca, le chocolat déshydraté en poudre, le lait déshydraté en poudre et leurs mélanges.

Lorsque ledit au moins un constituant est une farine de céréales, la céréale est de préférence le blé, le seigle, le riz, le maïs, l'orge, le sorgho, le mil, le millet, l'avoine, le son, le méteil, le triticale, le sarrasin ou leurs mélanges.

Dans un mode de réalisation préféré de l'invention, ledit au moins constituant est la farine de coton.

Dans un autre mode de réalisation préféré de l'invention, ledit au moins un constituant est la farine de soja.

Une autre farine particulièrement appropriée en tant que carburant de l'invention est la farine de pomme de terre.

Toujours une autre farine appropriée en tant que carburant de l'invention est le tapioca.

Egalement, le carburant solide de l'invention peut être constitué de chocolat déshydraté en poudre.

Selon encore un autre mode de réalisation de l'invention, le carburant solide de l'invention est constitué de lait en poudre déshydraté.

De manière tout particulièrement préférée, le carburant solide de l'invention est constitué d'un mélange de deux ou plus desdits au moins un constituant.

L'invention propose également un mélange combustible composé du carburant de l'invention, en suspension dans l'air, à une concentration d'environ 200 mg de carburant par litre d'air.

L'invention sera mieux comprise et d'autres buts, caractéristiques, détails et avantages de celle-ci apparaîtront plus clairement au cours de la description explicative qui va suivre qui est faite en référence aux figures annexées dans lesquelles :

- La figure 1 représente schématiquement une vue de côté d'une tondeuse à gazon du commerce,
- la figure 2 représente une coupe agrandie de la partie notée II en figure 1, modifiée pour fonctionner avec le carburant de l'invention,
- la figure 3 montre la courbe granulométrique, mesurée avec un granulomètre laser LS de Coulter, d'une poudre de chocolat déshydraté du commerce utilisée à l'exemple 1,

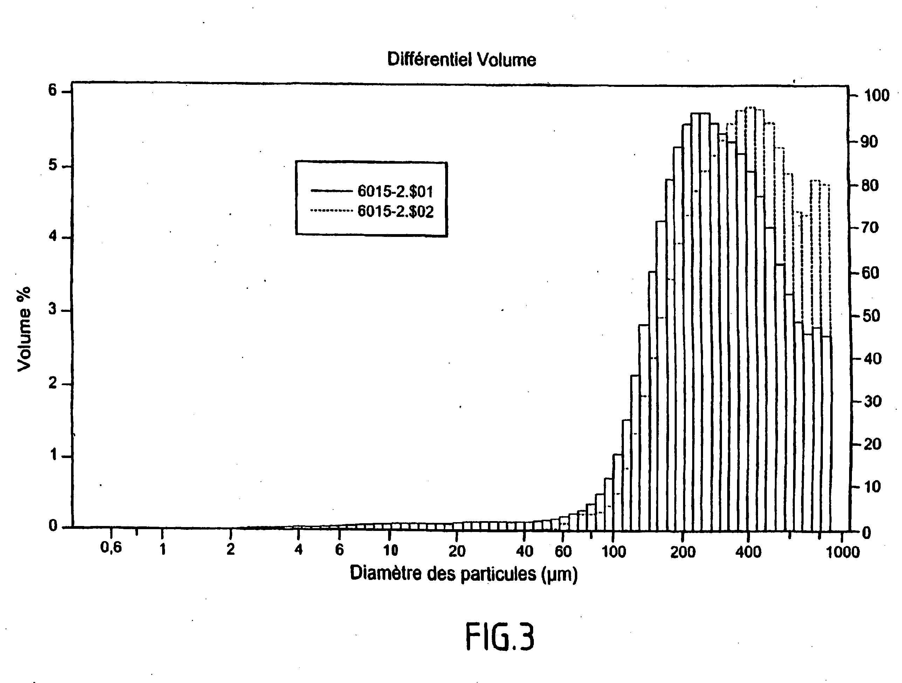

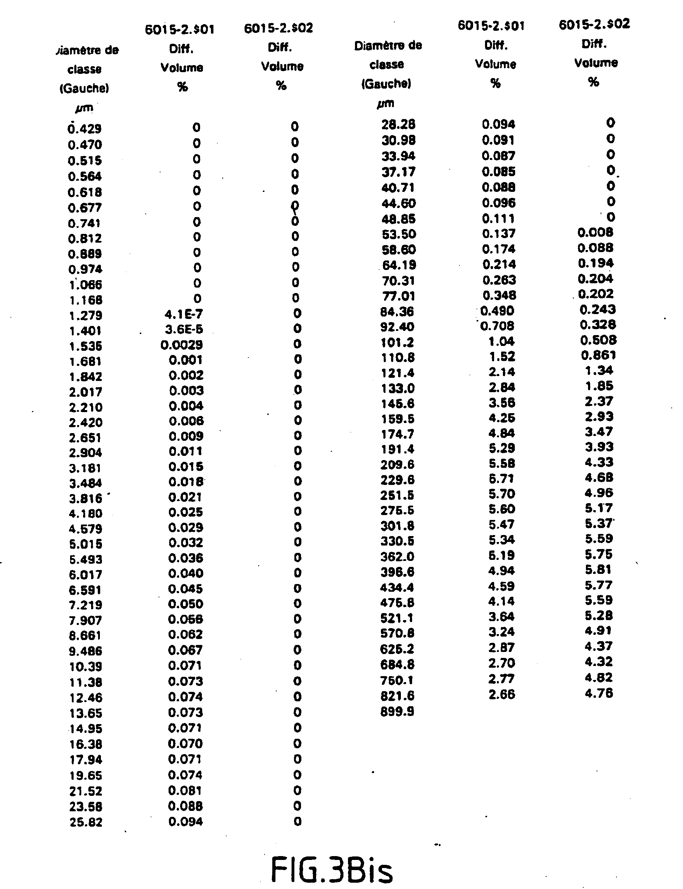

- La figure 3bis représente la courbe granulométrique de la figure 3 sous forme de valeurs numériques,

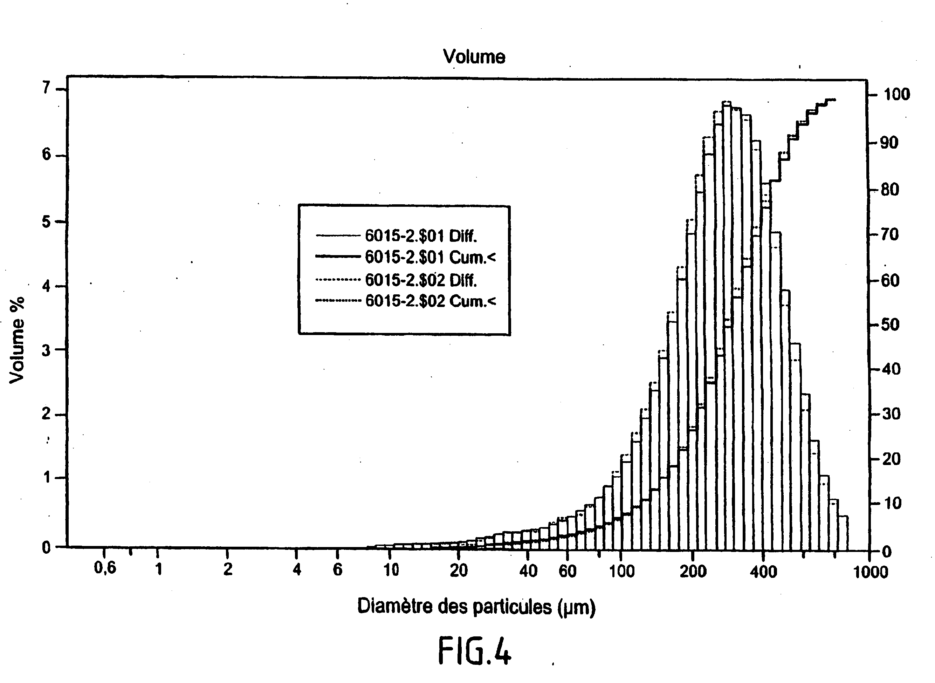

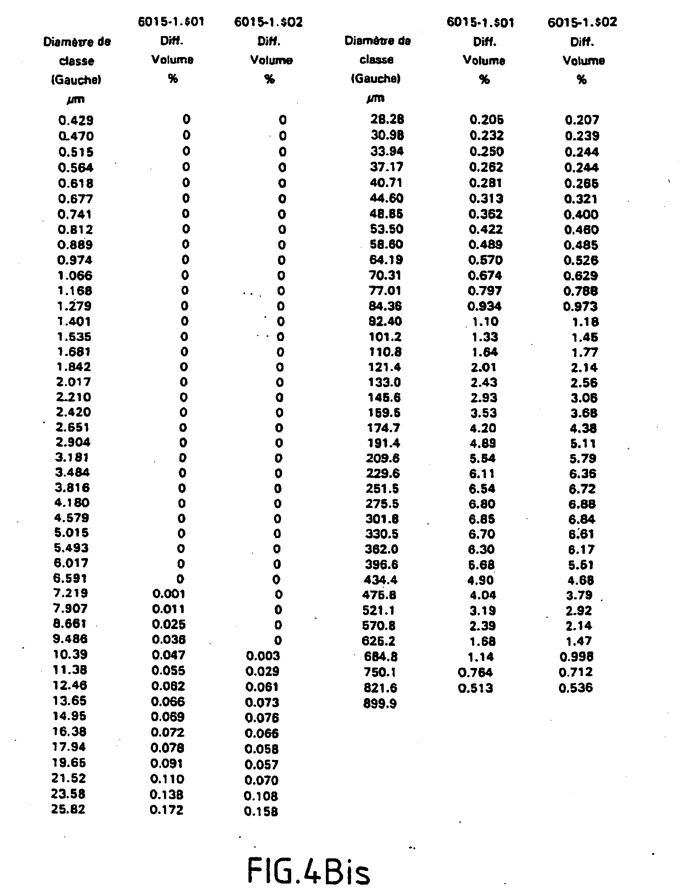

- la figure 4 montre là courbe granulométrique, mesurée avec un granulomètre laser LS de Coulter, d'une poudre de lait déshydratée du commerce utilisée à l'exemple 2,
- la figure 4bis représente la courbe granulométrique de la figure 4 sous forme de valeurs numériques,

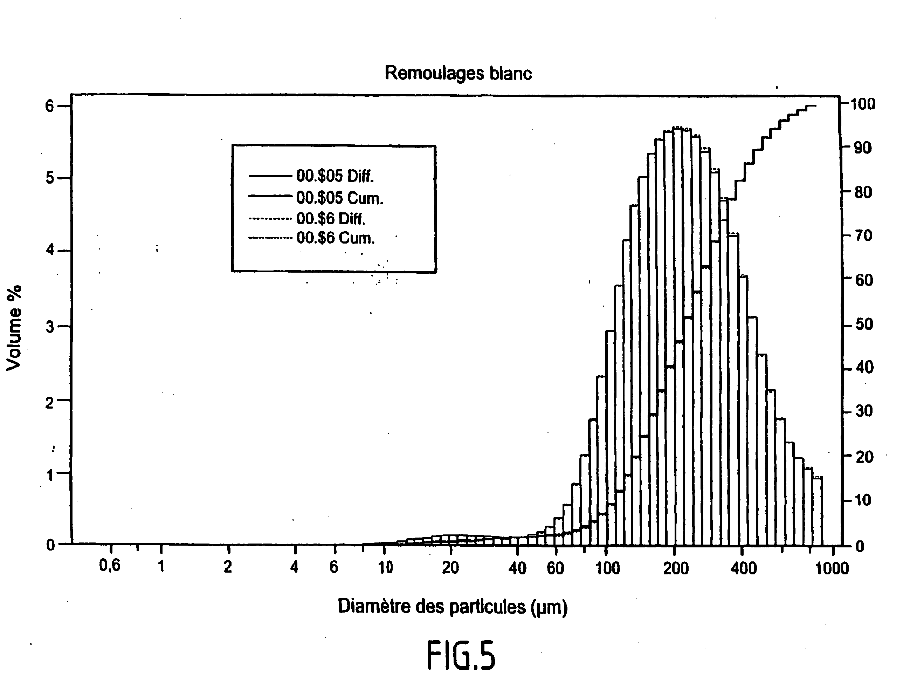

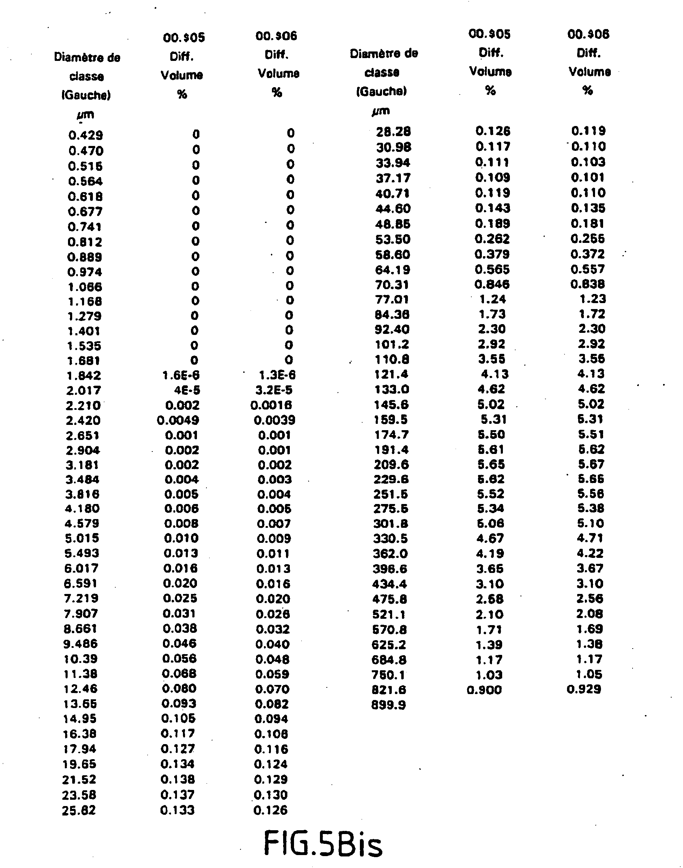

- la figure 5 montre la courbe granulométrique, mesurée avec un granulomètre laser LS de Coulter, d'une fraction de remoulage blancs d'une farine de blé utilisée à l'exemple 3,
- la figure 5 bis représente la courbe granulométrique de la figure 5 sous forme de valeurs numériques,

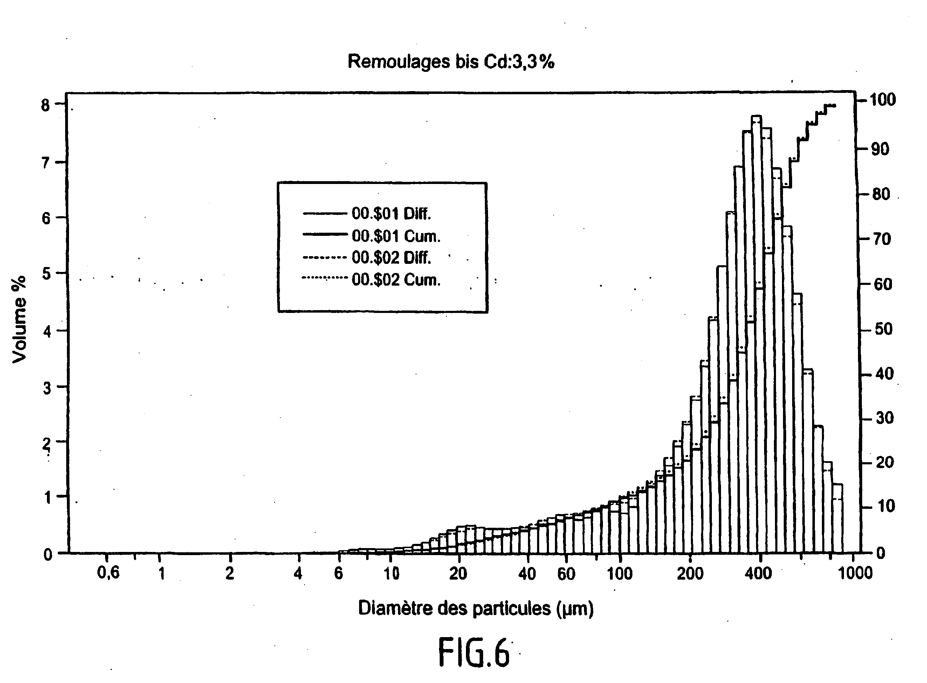

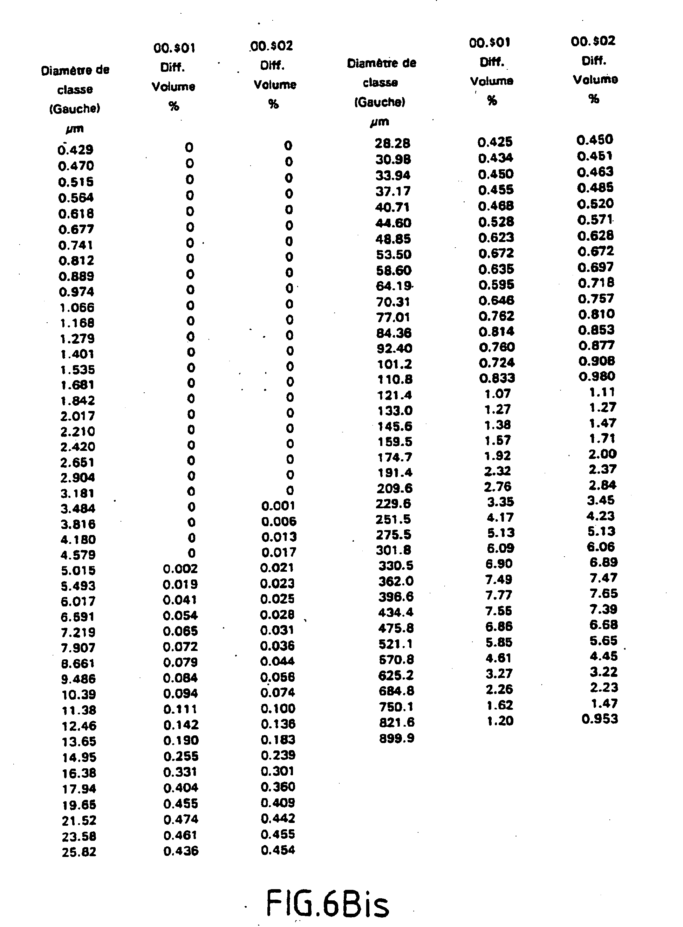

- la figure 6 montre la courbe granulométrique, mesurée avec un granulomètre laser LS de Coulter, d'une fraction de remoulage bis utilisée à l'exemple 4,
- la figure 6bis représente la courbe granulométrique de la figure 6, sous forme de valeurs numériques,

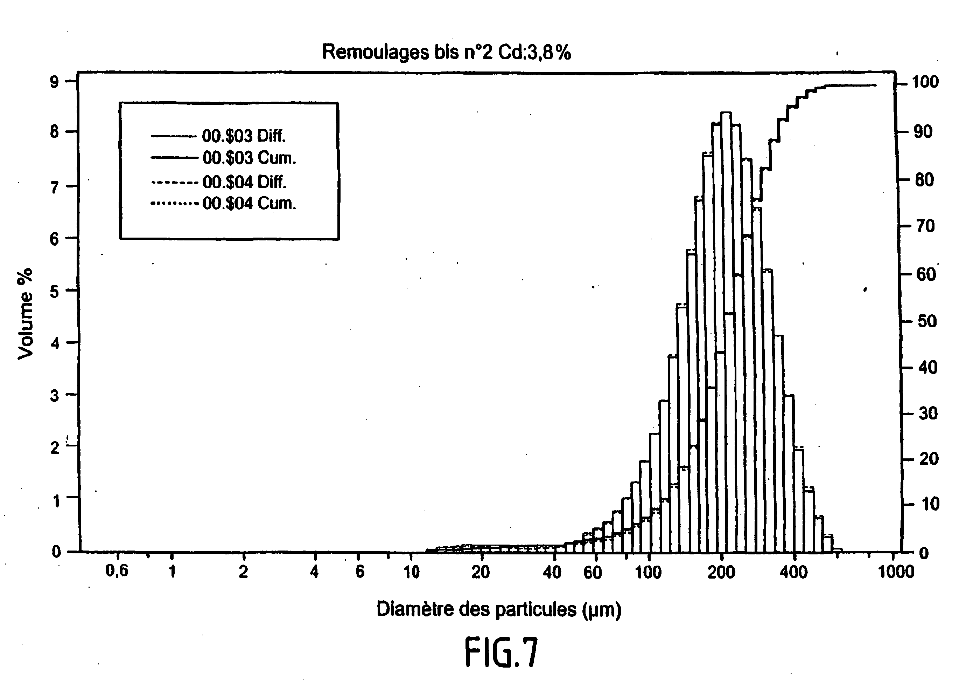

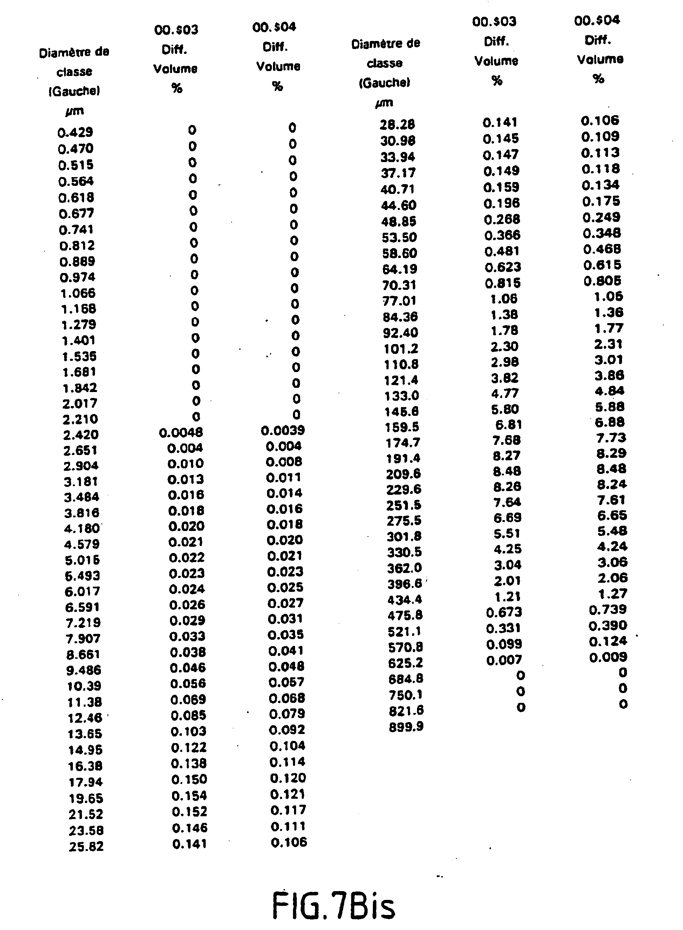

- la figure 7 montre la courbe granulométrique, mesurée avec un granulomètre laser LS de Coulter, d'une fraction de remoulage bis utilisée à l'exemple 5, et
- la figure 7bis représente la courbe granulométrique de la figure 7, sous forme de valeurs numériques.

La forte explosivité des poussières de grains de céréales a toujours été considérée comme le résultat de trois facteurs :

- la taille des particules des poussières dont le diamètre moyen de particules est inférieur à environ 75 $\mu$m,
- la présence de gaz provenant de la fermentation des grains eux-mêmes, et
- la présence d'un grand volume d'air dans lequel les particules de poussières se mettent en suspension.
  Cependant, ce phénomène d'explosivité n'a jamais été ni reporté ni étudié pour les farines obtenues industriellement par mouture des grains de céréales eux-mêmes.
  Or on a maintenant découvert de façon surprenante que de la farine de céréales ayant un diamètre moyen et un diamètre médian des particules supérieurs ou égaux à 150 $\mu$m, de préférence compris entre 150 et 500 $\mu$m, peut être utilisée en tant que carburant solide pour faire fonctionner, en particulier, des moteurs à combustion interne et, ainsi, peut remplacer les produits pétroliers ou gaziers.
  Cela est particulièrement surprenant et va à l'encontre d'un préjugé de l'art antérieur.
  En effet, le fait que les poussières de graines de céréales présentent une explosivité élevée n'a jamais été considéré comme en faisant pour autant de bons carburants, au contraire.
  Cela est dû tout d'abord au fait qu'en l'absence de turbulence, c'est-à-dire en régime laminaire, à richesse 1, c'est-à-dire à un rapport sto:chiométrique carburant : air égal à 1:1, et à pression atmosphérique, la vitesse de propagation de flamme des hydrocarbures est d'environ 0,4 m/s alors que celle des farines agroalimentaires est d'environ 30 m/s.
  Or, dans un moteur le dispositif piston/soupape présente la particularité d'augmenter la turbulence dans la chambre de combustion presque proportionnellement à la vitesse de rotation du moteur.
  D en résulte une augmentation de la vitesse de combustion.
  Pour les hydrocarbures, cette vitesse de combustion est de 20 m/s, c'est une combustion par déflagration, alors que la vitesse de combustion des farines agroalimentaires peut atteindre, quant à elle, 2 000 m/s, c'est-à-dire une combustion par détonation qui caractérise les explosifs.
  Or, dans un moteur, la propagation d'une onde explosive entraîne la formation et la propagation d'ondes de choc qui se propagent dans les gaz brûlés ou non encore brûlés.
  D'une part ces ondes de choc, qui se perçoivent par un fort cliquetis, tambourinage ou cognement, ont pour conséquence de réduire la puissance du moteur et d'en accélérer l'usure. D'autre part, quant elles sont diffractées ou réfléchies, de très hautes températures peuvent apparaître.
  Ainsi, au regard de leurs grandes vitesses de combustion en régime turbulent, tout laisse à penser que les farines agroalimentaires sont inappropriées pour un emploi en tant que carburant ou combustible, en particulier dans les moteurs à combustion interne.

De plus, tout produit apparaissant *a priori* approprié pour constituer un bon carburant et/ou combustible doit présenter d'autres caractéristiques physiques et thermodynamiques qui sont : la capacité à être comprimé ou taux de compression, tout en ayant une température d'auto-inflammation acceptable, l'Energie Minimale d'Inflammation, l'enthalpie, la volatilité, la tenue au gel, entre autres.

En effet, il y a intérêt à augmenter la compression pour augmenter le rendement thermique d'un moteur et, dans tous les types de moteurs, il y a une phase de compression qui porte l'air ou le mélange air/carburant à haute température avant la phase d'allumage/combustion. Or, lorsque l'on comprime un gaz, sa température augmente. Ainsi, dans un moteur à allumage commandé, le taux de compression est très vite limité par l'auto-inflammation du mélange intime air/carburant. Ce mélange intime air/carburant est admis dans le cylindre, puis comprimé par le piston. La température en fin de phase de compression du mélange air/essence est d'environ 194°C. Dans ce type de moteur, tout est mis en oeuvre pour éviter l'auto-inflammation par compression.

A contrario, dans un moteur à allumage par compression ou moteur Diesel, seul l'air est admis dans le cylindre puis comprimé par le piston à un taux au moins deux fois plus élevé que dans le moteur à allumage commandé. Le carburant est injecté dans la chambre de combustion en fin de compression. Il en résulte une auto-inflammation du gazole au contact de l'air porté à une température d'environ 500°C.

Par conséquent, dans le cas d'un moteur à allumage par compression, à l'inverse du cas d'un moteur à allumage commandé, on provoque une auto-inflammation par compression.

Ainsi, pour pouvoir se substituer à l'essence ou au gazole , le produit candidat en tant que carburant et/ou combustible doit avoir une température d'auto-inflammation supérieure à 194°C pour une utilisation dans un moteur à allumage commandé et inférieure à SOD°C, dans le cas d'un moteur à allumage par compression.

Or, rien, dans l'art antérieur, n'indique que les farines agroalimentaires sont susceptibles de remplir cette double exigence, ni même une seule.

Cependant, la Température Minimale d'Inflammation des nuages de farines alimentaires a été déterminée; dans l'invention, de manière expérimentale dans un four "Godbert-Greenwald" et on a alors découvert que les Températures Minimales d'Inflammation sont comprises entre 350° et 500°C.

Donc les farines agroalimentaires peuvent se substituer à l'essence non seulement peuvent se substituer à l'essence, mais qui plus est, peuvent supporter des températures et donc des taux de compression plus élevés, ce qui contribue à augmenter le rendement du moteur à allumage commandé.

Quant au moteur à allumage par compression, là aussi elles peuvent se substituer avantageusement au gazole.

L'Energie Minimale d'inflammation est la quantité la plus faible d'énergie à appliquer à un combustible pour l'enflammer lorsqu'il est en mélange avec l'air. Elle est souvent caractérisée par l'énergie de l'étincelle d'une décharge capacitive.

Or, rien dans l'art antérieur ne suggère ou ne divulgue que l'énergie minimale d'inflammation des farines agroalimentaires soit comparable à celle des gaz.

On a maintenant découvert que l'Energie Minimale d'Inflammation la plus faible des farines agroalimentaires est de l'ordre du millijoule, c'est-à-dire voisine de celle des gaz. Cette Energie Minimale d'Inflammation des farines agroalimentaires a été déterminée de manière expérimentale dans un inflammateur "Hartmann".

Par ailleurs, les hydrocarbures liquides tels que l'essence, le gazole et le kérosène ont un Pouvoir Calorifique Spécifique ou enthalpie d'environ 43 MJ/Kg. Alors que les farines agroalimentaires ont un Pouvoir Calorifique Spécifique, seulement d'environ 15 MJ/Kg.

Là encore, cette propriété thermodynamique des farines agroalimentaires laisse à penser que les farines agroalimentaires ne sont pas appropriées en tant que carburant et/ou combustible pour un moteur thermique.

Or, il n'en est rien.

En effet, le pouvoir calorifique de la cylindrée de 1 litre de mélange tonnant pour un mélange tonnant constitué d'air/essence est de 760 calories alors que l'on a maintenant découvert que le pouvoir calorifique de la cylindrée de 1 litre de mélange tonnant constitué d'air/farine est de 703 calories.

En comparaison à l'essence, il est brûlé plus de deux fois plus de farine pour le même volume d'air. Le rapport stoechiométrique est de 15,1 grammes d'air pour 1 gramme d'essence et de 6,5 grammes d'air pour 1 gramme de farine, soit un rapport stoechiométrique équivalent au méthanol.

D'autre part, le système motorisé de base étant très peu modifié, le rapport des consommations pour le calcul d'équivalence répond au simple rapport des pouvoirs calorifiques :

$$1 \text{ litre d'essence} = 43 \text{ MJ} \times 0,7 \text{ (densité de l'essence)} = 30 \text{ MJ}$$

$$1 \text{ litre de farine} = 15 \text{ MJ} \times 1,5 \text{ (densité de la farine agroalimentaire)} = 22,5 \text{ MJ}$$

Par conséquent, 1,3 litre de farine est équivalent à 1 litre d'essence.

Quant à la tenue au gel des farines agroalimentaires, ces farines agroalimentaires contenant naturellement environ 15 % en poids d'eau, tout laisse à penser qu'elles se cristallisent à une température inférieure à 0°C. Du fait de cette cristallisation, elles perdraient donc leur fluidité et formeraient un ou des blocs compacts et indissociables.

Or, tel n'est pas le cas car les farines agroalimentaires (testées à - 20°C) ont une tenue au gel que n'ont pas certains combustibles liquides tels que les fuels domestiques et l'essence, dont les points de congélation sont respectivement de - 9°C et - 18°C.

De plus, elles conservent leur fluidité à cette température.

La valeur d'un combustible pour moteur à combustion interne dépend également de sa volatilité.

La volatilité d'un combustible est caractérisée par sa densité.

Or, si les essences ont une densité de 0,7 et les gazoles et kérosènes de 0,8, la densité des farines agroalimentaires est de 1,5.

Là encore, cette caractéristique physique des farines alimentaires ne plaide pas en faveur de leur emploi en tant que carburant et/ou combustible.

Mais, les farines agroalimentaires étant des produits solides pulvérulents ne se transformant pas en une phase gazeuse pour leur combustion, les farines agroalimentaires ne sont pas sujettes au phénomène bien connu et préjudiciable du "vaporlock" des carburants liquides, ce qui est un de leurs avantages.

D'autres caractéristiques physiques des farines agroalimentaires font que l'homme du métier des carburants et des combustibles les écarte.

En effet, les farines agroalimentaires sont, contrairement aux hydrocarbures liquides, miscibles avec l'eau. Ce qui signifie les farines contiennent naturellement de l'eau, et ce jusqu'à une proportion de 15 % en poids de leurs masses totales. Cette teneur élevée en eau abaisse leur Pouvoir Calorifique et leur vitesse de combustion, tout en augmentant leur Energie Minimale d'Inflammation nécessaire.

D'autre part, l'eau augmente la viscosité des farines agroalimentaires et donc diminue la fluidité et la volatilité des particules pouvant aller selon de degré d'hydratation, jusqu'à un amalgame pâteux (grumeaux) et même une consistance très liquide susceptible de provoquer l'arrêt du moteur.

Par ailleurs, les particules présentes dans la poudre que constitue les farines agroalimentaires présentent une forte cohésion qui conduit à un phénomène d'agglomération et de collage/adhésion aux parois du récipient les contenant.

Ainsi, les plus grandes difficultés sont à prévoir pour l'écoulement des farines agroalimentaires du réservoir contenant le carburant jusqu'au point de mélange entre ce carburant et l'air.

Là encore, cette caractéristique physique ne plaide pas en faveur de l'usage des farines agroalimentaires en, tant que carburant et/ou combustible.

Or, tous ces préjugés de: l'art antérieur et les problèmes cités ci-dessus ont été résolus par l'invention, qui est basée sur le principe du choix des granulométries des poudres agroalimentaires constituant le carburant et/ou le combustible de l'invention.

En effet, le choix d'une poudre agroalimentaire ayant une taille des particules, c'est-à-dire un diamètre moyen et un diamètre médian supérieurs ou égaux à 150 μm, de préférence compris entre 150 et 500 μm, permet de contrôler la vitesse de combustion : en augmentant la taille des particules de poudres agroalimentaires, on diminue fa surfacé en contact avec l'oxygène de l'air qui est le comburant. Il en résulte une réduction de la vitesse d'oxydation.

D'autre part, le taux de cendres, c'est-à-dire la teneur en minéraux tels que le potassium, le magnésium, le calcium, le phosphore et le sodium, des poudres agroalimentaires constituant le carburant et/ou le combustible de l'invention, joue également le rôle d'antidétonant, à l'image du plomb tétraéthyle anciennement ajouté à l'essence et actuellement remplacé par le benzène et le potassium.

De la même façon, le choix de cette granulométrie particulière résout le problème lié à leur teneur en eau naturelle et à la forte cohésion entre les particules.

En effet, la quantité d'eau absorbée et la vitesse d'absorption par les particules des poudres agroalimentaires de l'invention diminue avec la granulométrie des particules.

Or, les farines ne requièrent pas pour leur stockage plus de précautions que les carburants liquides eux-mêmes sensibles à l'eau, en raison de leur grande stabilité.

Quant au problème de la cohésion entre les particules qui conduit au phénomène d'agglomération, la génération d'une vibration telle que décrite dans la suite permet de surmonter ce problème.

Les diamètres moyens et médians des carburants solides de l'invention ont été mesurés par la méthode de mesure de granulométrie laser de COULTER, sur un appareil Coulter LS.

Le diamètre moyen est le diamètre calculé par le logiciel de l'appareil et est représentatif du diamètre que les particules, dont la taille est mesurée, ont en moyenne.

Le diamètre correspond à la taille de particules à laquelle 50 % en volume des particules constituant l'échantillon dont la taille est mesurée, est une taille inférieure et 50 % en volume des particules constituant l'échantillon et dont la taille est mesurée est une taille supérieure.

Plus le diamètre moyen et le diamètre médian sont proches, plus la poudre, dont la taille des particules est mesurée, est homogène c'est-à-dire est monopopulée.

En effet, la distribution granulométrique de la poudre constituant le carburant de l'invention est également un critère important.

De préférence, la répartition granulométrique de la taille des particules constituant l'état de l'invention est étroite c'est-à-dire que le carburant contient le moins possible de populations granulométriques différentes. Cela signifie que dans le carburant de l'invention, plus de 70 % en volume des particules constituant la poudre doivent avoir un diamètre des particules supérieur ou égal à environ 150 $\mu$m.

Le terme "farine" signifie ici la farine produite industriellement et utilisée à l'heure actuelle par exemple dans l'industrie de la boulangerie. Cette farine est utilisable directement, sans autre transformation ou traitement en tant que carburant.

Elle peut être utilisée par exemple, pour le fonctionnement des moteurs à combustion interne, que ce soit à allumage commandé ou diesel, pour le fonctionnement de turbines, de chaudières, par exemple pour le chauffage central et également pour le fonctionnement des fours industriels.

La composition des farines de céréales varie en fonction de la céréale et de ses conditions de culture. Elle dépend également de la méthode utilisée pour le broyage et des taux d'additifs éventuellement ajoutés.

Les farines de céréales actuellement sur le marché contiennent majoritairement de l'amidon, c'est-à-dire une teneur supérieure à 70 % d'amidon, de l'eau, des protéines et une très faible proportion de corps gras.

Ainsi, les farines de céréales utilisées et utilisables en tant que carburant selon l'invention contiennent majoritairement de l'amidon et au moins 15 % en poids de glucides.

De plus, ces farines ont un diamètre moyen de particules dont le diamètre moyen et le diamètre médian sont supérieurs ou égaux à 150 $\mu$m, de préférence compris entre 150 et 500 $\mu$m.

Les farines particulièrement préférées sont celles dont plus de 70 % en volume des particules ont un diamètre supérieur ou égal à 150 $\mu$m.

Les farines de céréales utilisées et testées dans l'invention sont les farines de blé, de seigle, de riz, de maïs, d'orge, de sorgho, de mil, de millet, d'avoine, de son, de méteil, de triticale, ou de sarrasin.

Certaines de ces farines industrielles actuellement commercialisées peuvent avoir un diamètre moyen et un diamètre médian de particules inférieurs à 150 $\mu$m.

Dès lors, l'invention présente un avantage supplémentaire lié au coût de production des farines utilisable en tant que carburant de l'invention.

En effet, pour produire des farines ayant un diamètre moyen et un diamètre médian de particules supérieurs ou égaux à 150 $\mu$m, de préférence compris entre 150 et 500 $\mu$m, le procédé de broyage et de tamisage des grains pour obtenir la farine industrielle classique peut être stoppé plus tôt.

Le procédé de fabrication des farines de l'invention est donc moins long et par conséquent plus économique.

De plus, on pourra utiliser des fractions obtenues lors de la fabrication des farines qui auraient normalement été rejetées parce que n'ayant pas une taille moyenne de particules appropriée pour une utilisation dans l'industrie alimentaire.

On a également découvert que de manière surprenante d'autres produits pulvérulents et industriels utilisés couramment pouvaient être utilisés en tant que carburants à condition qu'ils contiennent majoritairement de l'amidon ou de la cellulose ou un de leurs dérivés et au moins 15 % en poids de glucides et que le diamètre moyen et le diamètre médian des particules de poudre de ces produits sont supérieurs ou égaux à 150 $\mu$m, de préférence compris entre 150 et 500 $\mu$m.

Il s'agit des farines de coton, de soja, de pomme de terre et de manioc. La farine de manioc est communément appelée tapioca.

De manière tout aussi surprenante, on a de plus découvert que de la poudre de chocolat déshydraté ainsi que de lait déshydraté, qui contiennent majoritairement du lactose ou un dérivé de lactose et au moins 15 % en poids de glucides et dont le diamètre moyen et le diamètre médian des particules sont supérieurs, ou égaux à 150 $\mu$m, de préférence compris entre 150 et 500 $\mu$m, pouvaient également être utilisées.

Ainsi, l'invention est basée sur la découverte surprenante que des poudres de produits naturels et de consommation courante, dont le diamètre moyen et le diamètre médian des particules sont supérieurs ou égaux à 150 $\mu$m, de préférence compris entre 150 et 500 $\mu$m et qui contiennent majoritairement au moins un composé sélectionné dans le groupe consistant en l'amidon, un dérivé d'amidon, la cellulose, un dérivé de cellulose, le lactose, un dérivé de lactose ou leurs mélanges et au moins 15 % en poids de glucides, constituaient un excellent carburant solide.

Le carburant de l'invention peut être constitué d'une poudre unique, par exemple, de la farine de coton seule, mais il peut être également un mélange de deux ou plus de poudres différentes, par exemple de la farine de coton plus de la farine de soja ou bien de la farine de coton plus du lait déshydraté en poudre.

De préférence, on utilisera un mélange d'au moins deux farines ayant des diamètres moyens et des diamètres médians de particules différents car la combustion des plus petites particules de farine amorcera la combustion de particules plus grosses.

En outre, des mélanges de plusieurs types de poudres de granulométrie et de pouvoir calorifique différents permettent d'obtenir la thermodynamique recherchée et, de plus, de réduire le prix du carburant par mélange d'une poudre peu coûteuse et d'une farine plus coûteuse comme c'est le cas pour la farine de pommes de terre et le chocolat déshydraté en poudre.

Le carburant de l'invention peut être utilisé seul ou en mélange avec d'autres carburants.

Cependant, le carburant de l'invention n'est pas un additif à un autre carburant. Il est bel et bien un carburant en lui-même.

Ce carburant étant constitué de farines de céréales, de coton, de soja, de pommes de terre ou de chocolat déshydraté ou de lait déshydraté en poudre ne produit aucun rejet nocif lors de sa combustion.

A titre d'exemple, la farine de blé est constituée en moyenne de 73,5 % en poids d'amidon, de 14,8 % en poids d'eau, de 10,8 % en poids de protéines et de 0,8 % en poids de corps gras.

La combustion de l'amidon contenu dans la farine de blé en présence d'air, c'est-à-dire essentiellement d'oxygène et d'azote, produit en tant que rejets dans l'atmosphère du $CO_2$, de l'eau et de l'azote. La combustion des protéines produit quant à elle comme rejets de l'eau, du $CO_2$, du $SO_2$, de l'azote et des traces de $SO_3$, de $NH_3$ et de $NO_x$.

On voit alors que la combustion d'une farine de blé produira majoritairement de l'eau et de l'azote et environ 18 % de $CO_2$ qui sont des produits non toxiques. Les quantités produites de $SO_3$, de $NH_3$ et de $NO_x$ sont négligeables lors de la combustion d'une telle farine.

Le carburant de l'invention est à utiliser en suspension dans de l'air pour produire un mélange combustible. La proportion -préférée du carburant de l'invention dans un litre d'air est d'environ 200 mg de carburant de l'invention dans un litre d'air.

Le pouvoir calorifique d'un litre du mélange combustible de l'invention, lorsque le carburant est de la farine de blé, est de 703 calories. A titre de comparaison, le pouvoir calorifique d'un litre de mélange d'air et d'essence est de 760 calories.

Ainsi, bien que le pouvoir énergétique du mélange combustible de l'invention soit légèrement inférieur (de 8 %) à celui de l'essence, il est néanmoins parfaitement approprié.

Les rejets produits lors de la combustion du mélange combustible de l'invention ne contiennent ni plomb, ni benzène, ni soufre, ni hydrocarbures, ni monoxyde de carbone et une quantité négligeable d'oxydes d'azote ou de particules solides.

Le carburant de l'invention peut être utilisé sans modification majeure des moteurs à combustion interne actuels. De par son pouvoir calorifique on devra, dans les véhicules actuels, remplacer un litre d'essence par environ 1,3 l de carburant selon l'invention.

On voit de ce qui précède, que le carburant de l'invention comporte de nombreux avantages. Il est économiquement plus avantageux que les produits pétroliers et les gaz liquéfiés, il est disponible en abondance, c'est une source d'énergie indéfiniment renouvelable. Il est biodégradable, neutre pour l'effet de serre et facilement stockable.

En effet, bien que la composition des rejets de combustion des farines agroalimentaires inclue le $CO_2$ comme les hydrocarbures liquides, la combustion des poudres de produits agroalimentaires tels que définis dans l'invention ne fait que restituer le $CO_2$ absorbé lors de la pousse des végétaux dont elles sont issues, contrairement aux produits d'origine fossile qui déplacent massivement les réserves carboniques du sol vers le gaz carbonique atmosphérique. La combustion du carburant de l'invention est donc neutre vis-à-vis de l'effet de serre.

De plus, la manipulation des carburants de l'invention ne présente aucun danger pour l'être humain. En effet, le carburant de l'invention étant constitué de particules dont le diamètre moyen et le diamètre médian sont supérieurs ou égaux à 150 $\mu$m, il n'y a aucun risque d'explosion de ce carburant, en cas de choc violent.

Le carburant de l'invention ne présente également aucun danger ni pour lés voies respiratoires ni en cas d'ingestion, s'agissant de produits comestibles.

Un autre avantage de l'invention est qu'on peut choisir le parfum dégagé lors de sa combustion, en mélangeant les différentes poudres décrites ici.

Pour mieux faire comprendre l'objet de l'invention, on va en décrire maintenant à titre d'exemples purement illustratifs et non limitatifs plusieurs modes de mise en oeuvre.

## EXEMPLES

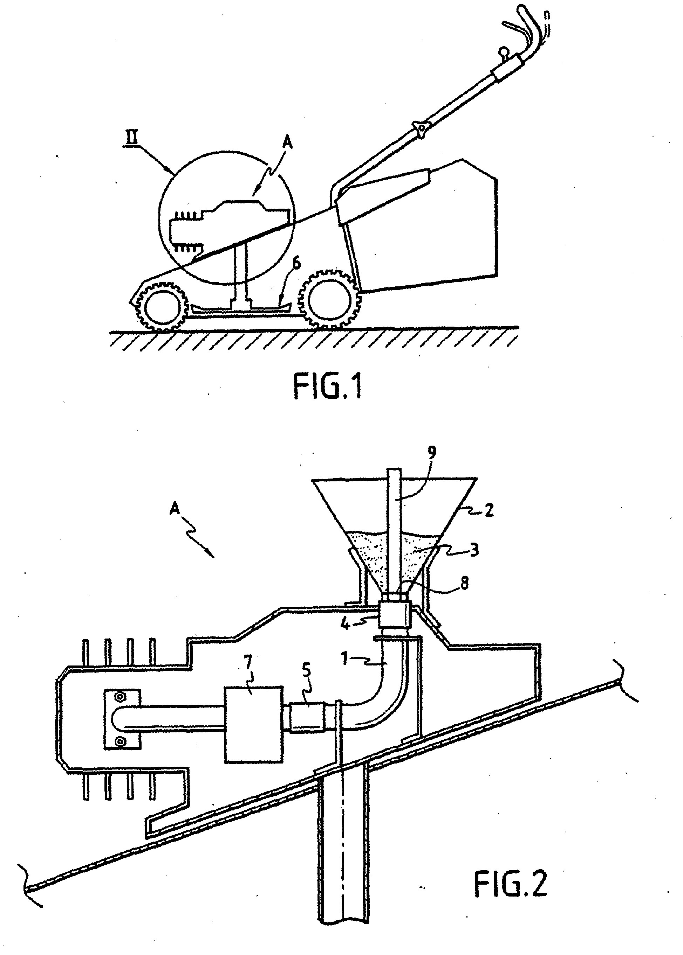

Les essais de mise en oeuvre de carburant de l'invention ont été effectués sur une tondeuse à gazon du commerce fonctionnant à l'origine à l'essence, telle que représentée en figure 1.

Comme on le voit en figure 1, cette tondeuse à gazon est équipée d'un réservoir à essence noté A, situé au-dessus du carburateur qui alimente, par gravité, en essence, le carburateur. Le moteur de la tondeuse à gazon fonctionne à régime constant et la lame de coupe du gazon, notée 6 en figure 1, est en prise directe avec le moteur de la tondeuse. Ainsi, à chaque tour du moteur correspond un tour de la lame de coupe 6.

Pour fonctionner avec le carburant de l'invention, peu de modifications ont été effectuées.

Seuls le réservoir de carburant et la partie admission du carburant au carburateur de cette tondeuse à gazon ont été modifiés.

Ces modifications sont représentées en figure 2 qui est une vue agrandie de la partie notée II en figure 1. Comme représenté en figure 2, dans laquelle le carburateur non modifié de la tondeuse à gazon du commerce est noté 7, le filtre à air de la tondeuse à gazon du commerce est enlevé et remplacé par un tube coudé, noté 1 en figure 2, en un matériau rigide tel que du métal ou du PVC.

Ce tube coudé 1 est relié à une de ces extrémités, par un raccord noté 5 en figure 2 en un matériau souple, à l'entrée d'air du carburateur 7.

L'autre extrémité du tube coudé 1 est relié au réservoir noté 2 en figure 2 contenant le carburant en poudre de l'invention, noté 3 en figure 2.

Ce réservoir 2 est ouvert à son extrémité supérieure pour permettre une entrée d'air en permanence et est muni d'une plaque perforée, notée 8 en figure 2, à son extrémité inférieure, pour permettre le passage du carburant 3. La taille et le nombre des perforations de la plaque perforée 8 sont calibrés pour permettre le passage du rapport voulu poids de carburant/volume d'air.

Le réservoir 2 est également muni d'un passage d'air noté 9 en figure 2 permettant l'alimentation en air du moteur de la tondeuse à gazon. Ce passage d'air 9 peut être, comme représenté en figure 2, un passage d'air central situé sur la plaque perforée 8.

Il pourra également être situé sur le côté de la plaque perforée 8. Il pourra tout aussi bien être un passage d'air situé à tout autre endroit mais qui permettra l'alimentation en air de moteur de la tondeuse à gazon.

Ainsi, selon le rapport voulu poids de carburant/volume d'air et le débit voulu du carburant, on fera varier le diamètre et/ou le nombre des perforations.

Le réservoir 2 est situé au-dessus du carburateur 7 pour l'alimenter par gravité et aspiration d'air. Le mélange air/carburant se fait, au point de rencontre de l'air et de la farine après, c'est-à-dire sous la plaque perforée 8.

Il est également nécessaire d'induire une vibration du réservoir 2, pour introduire la quantité voulue du carburant de l'invention, au débit voulu.

Cela peut être réalisé par tout moyen approprié connu de l'homme de l'art.

Cependant dans les tests de mise en oeuvre réalisés ici, cette vibration est créée en plaçant un poids sur l'extrémité de la lame de coupe de gazon 6 représentée en figure 1. Ce poids déséquilibre la lame de coupe 6 et induit ainsi, à chaque tour de lame de coupe 6 qui correspond à un tour de moteur, une vibration du réservoir 2.

## EXEMPLE 1

De la poudre de chocolat déshydratée du commerce a été utilisée en tant que carburant de la tondeuse à gazon modifiée comme indiqué ci-dessus.

Cette poudre de chocolat a une répartition granulométrique telle que représentée sous la forme d'une courbe en figure 3 et sous la forme de valeurs numériques en figure 3bis.

Deux mesures de granulométrie successives ont été effectuées sur cette poudre et les figures 3 et 3bis font donc apparaître les valeurs trouvées pour chacune de ces deux mesures.

Dans la figure 3, le premier essai de mesure est noté 6015-2. $ 01 et apparaît en trait plein et le second essai de mesure est notée 6015-2. $ 02 et apparaît en trait pointillé.

Le diamètre moyen des particules de la poudre de chocolat déshydratée du commerce est de 281,2 $\mu$m pour la première mesure et de 357,1 $\mu$m pour la seconde mesure.

Le diamètre médian est dans le cas du premier essai de 290,4 $\mu$m et est dans le cas du second essai de 370,3 $\mu$m.

Comme on le voit, le diamètre moyen et le diamètre médian de cette poudre sont très proches, ce qui indique une répartition granulométrique étroite, comme on le voit en figure 3.

Dans les deux essais de mesure, plus de 70 % en volume des particules de la poudre de chocolat ont des diamètres supérieurs à 150 $\mu$m.

La tondeuse à gazon a fonctionné avec ce carburant sans aucun problème, jusqu'à épuisement du chocolat déshydraté en poudre contenu dans le réservoir 2.

## EXEMPLE 2

Le même essai qu'à l'exemple 1 a été réalisé mais en utilisant de la poudre de lait déshydraté du commerce dont la granulométrie a été mesurée comme à l'exemple 1.

Dans ce cas également deux mesures de granulométrie ont été effectuées sur la poudre de lait déshydraté.

Les résultats sont montrés en figure 4 sous forme de courbe et en figure 4bis sous forme de valeurs numériques.

La première mesure a été notée 6015-1. $ 01 et est représentée en trait plein en figure 4 et la seconde mesure a été notée 6015-1. $ 02 et est représentée en trait pointillé sur la figure 4.

Le diamètre moyen des particules de lait déshydraté est pour la première mesure de 254,4 $\mu$m et, pour la seconde mesure de 251,5 $\mu$m.

Le diamètre médian est de 279,1 $\mu$m pour la première mesure et de 272,9 $\mu$m pour la seconde mesure.

Là encore, plus de 70 % en volume des particules de cette poudre de lait ont un diamètre supérieur à 150 $\mu$m.

De la même façon qu'à l'exemple 1, la tondeuse à gazon a fonctionné, jusqu'à épuisement de la poudre de lait déshydraté contenue dans le réservoir 2.

- EXEMPLE 3

Le même essai qu'aux exemples 1 et 2 a été effectué mais avec la fraction de remoulage blancs d'une farine de blé.

La fraction de remoulage blancs d'une farine de blé est une des fractions normalement rejetées après le broyage et le sassage des grains de blé, dans le procédé de la fabrication des farines de blé à usage alimentaire.

Le sassage est une opération ayant pour but de purifier les semoules provenant du broyage du grain.

Deux mesures de granulométrie ont été effectuées sur cette fraction de remoulage blancs.

Les résultats des mesures de granulométrie effectuées cette fraction de remoulage blancs sont montrés en figure 5 sous forme de courbe et en figure 5bis sous forme de valeurs numériques. La première mesure est notée 00. $ 05 et est représentée en trait plein sur la figure 5 et la seconde est notée 00. $ 06 et est représentée en traits pointillés sur la figure 5.

Le diamètre moyen de cette fraction de remoulage blancs est de 217,3 $\mu$m pour la première mesure et de 218,7 $\mu$m pour la seconde mesure.

Le diamètre médian est de 222,7 $\mu$m pour la première mesure et de 223,4 $\mu$m pour la seconde mesure.

Pour cette fraction de remoulage blancs plus de 70 % en volume des particules ont un diamètre supérieur à 150 $\mu$m.

De la même façon, la tondeuse a fonctionné jusqu'à épuisement de la farine contenue dans le réservoir 2.

EXEMPLE 4

Le même essai qu'aux exemples 1, 2 et 3 ci-dessus a été effectué mais avec une fraction de remoulage bis d'une farine de blé.

La fraction de remoulage bis d'une farine de blé est également une des fractions normalement rejetées après le broyage et le sassage des grains de blé dans le procédé de fabrication d'une farine de blé à usage alimentaire.

Les résultats des mesures de granulométrie effectués sur cette fraction de remoulage bis sont montrés en figure 6 sous forme de courbe et ensuite 6bis sous forme de valeurs numériques.

Deux mesures de granulométrie ont été effectuées sur cette fraction de remoulage bis. La première mesure est notée 00. $ 01 et est représentée en trait plein sur la figure 6. La seconde mesure est notée 00. $ 02 et est représentée en traits pointillés sur la figure 6.

Le diamètre moyen de cette fraction de remoulage bis est de 277,9 $\mu$m pour la première mesure et de 273,4 $\mu$m pour la seconde mesure.

Le diamètre médian est de 355,1 $\mu$m pour la première mesure et de 349,0 $\mu$m pour la seconde mesure.

La fraction de remoulage bis utilisée à cet exemple comprend plus de 70 % en volume de particules ayant un diamètre supérieur à 150 $\mu$m.

De la même façon qu'aux exemples précédents, la tondeuse à gazon a fonctionné jusqu'à épuisement de la farine contenue dans le réservoir 2.

EXEMPLE 5

Le même essai qu'aux exemples 1 à 4 ci-dessus a été effectué mais avec une autre fraction de remoulage bis d'une farine de blé.

Les résultats des mesures de granulométrie effectuées sur cette fraction de remoulage bis comme montré en figure 7 sous forme de courbe et en figure 7bis sous forme de valeurs numériques.

Deux mesures de granulométrie ont été effectuées sur cette fraction de remoulage bis. La première mesure est notée 00. $ 03 et est représentée en trait plein sur la figure 7. La seconde mesure est notée 00. $ 04 et est représentée en traits pointillés sur la figure 7.

Le diamètre moyen de cette fraction de remoulage bis est de 190,2 $\mu$m pour la première mesure et de 192,2 $\mu$m pour la seconde mesure.

Le diamètre médian des particules de cette fraction de remoulage bis est de 205,6 $\mu$m pour la première mesure et de 206,0 $\mu$m pour la seconde mesure.

Plus de 70 % en volume des particules de cette fraction de remoulage bis ont un diamètre supérieur à 150 $\mu$m.

De la même façon qu'aux exemples 1 à 4, la tondeuse à gazon a fonctionné jusqu'à épuisement de la farine contenue dans le réservoir 2.

Bien entendu, l'invention n'est nullement limitée aux modes de réalisation décrits et illustrés qui n'ont été donnés qu'à titre d'exemples purement illustratifs et non limitatifs.

Ainsi, les carburants et le mélange combustible de l'invention peuvent être utilisés pour faire fonctionner les moteurs à combustion interne tels que les moteurs à allumage commandé, les moteurs à allumage par compression, les turbines à gaz, les turboréacteurs, les statoréacteurs, les pulsoréacteurs, c'est-à-dire les moteurs non seulement d'automobiles mais également dans le domaine de l'aéronautique.

Ils peuvent être également utiliser dans les moteurs à combustion externe tels que les turbines à vapeur, les machines à vapeur à piston, et les moteurs fonctionnant selon le cycle de Stirling et les moteurs fixes tels que les groupes électro-générateurs ou les pompes.

De même le carburant et le mélange combustible de l'invention pourront être utilisés pour faire fonctionner des chaudières par exemple de chauffage central ou faire fonctionner des fours dans tous types d'industrie.

C'est dire que l'invention comprend tous les équivalents techniques des moyens décrits ainsi que leurs combinaisons si celles-ci sont effectuées selon l'esprit et l'étendue de l'invention qui est définie par les revendications suivantes.

En résumé, le carburant et le combustible tels que définis de l'invention peuvent être utilisés en substitution des sources d'énergies liquides, solides ou gazeuses, telles que l'essence, le gazole, le kérosène, le mazout, le charbon pulvérisé, la houille, le butane, le propane, l'éthanol, le méthanol, etc.

## Revendications

1. Utilisation d'au moins un constituant qui contient majoritairement au moins un composé sélectionné dans le groupe consistant en l'amidon, le lactose, la cellulose, et leurs dérivés ; et au moins 15% en poids de glucides par rapport au poids total du (des) constituant(s), le(les) constituant(s) étant sous la forme d'une poudre d'un diamètre moyen et d'un diamètre médian de particules supérieur ou égal à 150 $\mu$m, en tant que carburant solide, seul ou en mélange avec un autre carburant, pour moteur à combustion interne ou pour moteur à combustion externe, ou pour moteur fonctionnant selon le cycle de stirling, ou pour moteur fixe, ou pour chaudière, ou pour four dans tout type d'industrie.

2. Utilisation d'au moins un constituant solide sous forme de poudre sélectionné dans le groupe consistant en une farine de céréale, une farine de coton, une farine de soja, une farine de pomme de terre, une farine de manioc, une poudre de chocolat déshydraté, une poudre de lait déshydraté, et leurs mélanges, ladite poudre ayant un diamètre moyen et un diamètre médian de particules supérieur ou égal à 150 $\mu$m, en tant que carburant solide, seul ou en mélange avec un autre carburant, pour moteur à combustion interne ou pour moteur à combustion externe, ou pour moteur fonctionnant selon le cycle de stirling, ou pour moteur fixe, ou pour chaudière, ou pour four dans tout type d'industrie.

3. Utilisation selon la revendication 1 ou 2, **caractérisée en ce que** le diamètre moyen et le diamètre médian des particules de ladite poudre sont compris entre 150 et 500 $\mu$m.

4. Utilisation selon la revendication 1 ou 2 ou 3, **caractérisée en ce que** plus de 70 % en volume de ladite poudre est constituée de particules ayant un diamètre supérieur ou égal à 150 $\mu$m.

5. Utilisation selon l'une quelconque des revendications précédentes, **caractérisée en ce que** ledit au moins un constituant est une farine de céréale sélectionnée dans le groupe consistant en la farine de blé, la farine de seigle, la farine de maïs, la farine d'orge, la farine de sorgho, la farine de mil, la farine de millet, la farine d'avoine, la farine de son, la farine de sarrasin, la farine de méteil, la farine de triticale, la farine de riz, et leurs mélanges.

6. Utilisation selon l'une quelconque des revendications 1 à 4, **caractérisée en ce que** ledit au moins un constituant est la farine de coton.

7. Utilisation selon l'une quelconque des revendications 1 à 4, **caractérisée en ce que** ledit au moins un constituant est la farine de soja.

**8.** Utilisation selon l'une quelconque des revendications 1 à 4, **caractérisée en ce que** ledit au moins un constituant est la farine de pomme de terre.

**9.** Utilisation selon l'une quelconque des revendications 1 à 4, **caractérisée en ce que** ledit au moins un constituant est la farine de manioc.

**10.** Utilisation selon l'une quelconque des revendications 1 à 4, **caractérisée en ce que** ledit au moins un constituant est du chocolat déshydraté en poudre.

**11.** Utilisation selon l'une quelconque des revendications 1 à 4, **caractérisée en ce que** ledit au moins un constituant est du lait déshydraté en poudre.

**12.** Utilisation selon l'une quelconque des revendications précédentes, **caractérisée en ce que** ledit (lesdits) au moins un constituant compose la totalité dudit carburant solide.

**13.** Utilisation selon l'une quelconque des revendications 1 à 12, **caractérisée en ce que** le carburant est utilisé en suspension dans l'air, à une concentration d'environ 200 mg de carburant par litre d'air.

**Claims**

**1.** Use of at least one constituent, which in majority contains at least one compound selected from the group consisting of starch, lactose, cellulose, and derivatives thereof; and at least 15% by weight of carbohydrates with respect to total weight of the constituent(s), said constituent(s) being in the form of a powder having an average diameter and a median diameter of particles higher or equal to 150 $\mu$m, as a solid fuel, alone or admixed with another fuel, for an internal combustion engine or for an external combustion engine, or for an engine working according to stirling cycle, or for a static engine, or for a boiler, or for a furnace in any type of industry.

**2.** Use of at least one solid constituent in the form of a powder selected from the group consisting of a cereal flour, cotton flour, a soybean flour, a potato flour, a cassava flour, a dehydrated chocolate powder, a dehydrated milk powder and their mixtures, said powder having an average diameter and a median diameter of particles higher or equal to 150 $\mu$m, as a solid fuel , alone or admixed with another fuel, for an internal combustion engine or for an external combustion engine, or for an engine working according to stirling cycle, or for a static engine, or for a boiler, or for a furnace in any type of industry.

**3.** Use according to claim 1 or 2, wherein the average particle diameter and the median particle diameter of said powder are ranging between 150 and 500 $\mu$m.

**4.** Use according to claim 1, or 2, or 3, wherein more than 70% by volume of said powder is consisting of particles with diameters higher than or equal to 150 $\mu$m.

**5.** Use according to any one of the preceding claims, wherein said at least one constituent is a cereal selected from the group consisting of wheat flour, rye flour, maize flour, barley flour, sorghum flour, foxtail flour, millet flour, oat flour, bran flour, buckwheat flour, corn dredge flour, triticale flour, rice flour and mixtures thereof.

**6.** Use according to any one of claims 1 to 4, wherein said at least one constituent is cotton flour.

**7.** Use according to any one of claims 1 to 4, wherein said at least one constituent is soybean flour.

**8.** Use according to any one of claims 1 to 4, wherein said at least one constituent is potato flour.

**9.** Use according to any one of claims 1 to 4, wherein said at least one constituent is cassava flour.

**10.** Use according to any one of claims 1 to 4, wherein said at least one constituent is dehydrated chocolate powder.

**11.** Use according to any one of claims 1 to 4, wherein said at least one constituent is dehydrated milk powder.

**12.** Use according to any one of the preceding claims, wherein said at least one constituent constitutes the whole of the solid fuel.

13. Use according to any one of claims 1 to 12, wherein said fuel is used in suspension in air, at a concentration of about 200 mg of fuel per liter of air.

**Patentansprüche**

1. Verwendung wenigstens einer Komponente, die mehrheitlich wenigstens eine Verbindung, die aus der Gruppe bestehend aus Stärke, Laktose, Zellulose und deren Derivaten ausgewählt ist, sowie wenigstens 15 Gew.-% Kohlenhydrate bezogen auf das Gesamtgewicht der Komponente(n) enthält, wobei die Komponente(n) in Form eines Pulvers mit einem durchschnittlichen Durchmesser und einem mittleren Durchmesser der Teilchen von größer oder gleich 150 $\mu$m, als fester Brennstoff, allein oder in Mischung mit einem weiteren Brennstoff, für Motoren mit innerer Verbrennung oder für Motoren mit äußerer Verbrennung oder für Stirling-Motoren oder für Standmotoren oder für Kessel oder für Öfen in jeder Art von Industrie vorliegt (vorliegen).

2. Verwendung wenigstens einer festen Komponente in Form eines Pulvers, ausgewählt aus der Gruppe bestehend aus einem Getreidemehl, einem Baumwollmehl, einem Sojamehl, einem Kartoffelmehl, einem Maniokmehl, einem Pulver aus dehydrierter Schokolade, einem Trockenmilchpulver und deren Mischungen, wobei das Pulver einen durchschnittlichen Durchmesser und einen mittleren Durchmesser der Teilchen von größer oder gleich 150 $\mu$m aufweist, als fester Brennstoff, allein oder in Mischung mit einem weiteren Brennstoff, für Motoren mit innerer Verbrennung oder für Motoren mit äußerer Verbrennung oder für Stirling-Motoren oder für Standmotoren oder für Kessel oder für Öfen in jeder Art von Industrie.

3. Verwendung nach Anspruch 1 oder 2, **dadurch gekennzeichnet, daß** der durchschnittliche Durchmesser und der mittlere Durchmesser der Teilchen des Pulvers zwischen 150 und 500 $\mu$m liegen.

4. Verwendung nach Anspruch 1 oder 2 oder 3, **dadurch gekennzeichnet, daß** mehr als 70 Vol.-% des Pulvers von Teilchen mit einem Durchmesser größer oder gleich 150 $\mu$m gebildet sind.

5. Verwendung nach irgendeinem der vorhergehenden Ansprüche, **dadurch gekennzeichnet, daß** die wenigstens eine Komponente ein Getreidemehl ist, das aus der Gruppe bestehend aus Weizenmehl, Roggenmehl, Maismehl, Gerstemehl, Sorghomehl, Hirsemehl, Rispenhirsemehl, Hafermehl, Kleiemehl, Buchweizenmehl, Mengkornmehl, Triticalemehl, Reismehl und deren Mischungen ausgewählt ist.

6. Verwendung nach irgendeinem der Ansprüche 1 bis 4, **dadurch gekennzeichnet, daß** die wenigstens eine Komponente Baumwollmehl ist.

7. Verwendung nach irgendeinem der Ansprüche 1 bis 4, **dadurch gekennzeichnet, daß** die wenigstens eine Komponente Sojamehl ist.

8. Verwendung nach irgendeinem der Ansprüche 1 bis 4, **dadurch gekennzeichnet, daß** die wenigstens eine Komponente Kartoffelmehl ist.

9. Verwendung nach irgendeinem der Ansprüche 1 bis 4, **dadurch gekennzeichnet, daß** die wenigstens eine Komponente Maniokmehl ist.

10. Verwendung nach irgendeinem der Ansprüche 1 bis 4, **dadurch gekennzeichnet, daß** die wenigstens eine Komponente pulverförmige dehydrierte Schokolade ist.

11. Verwendung nach irgendeinem der Ansprüche 1 bis 4, **dadurch gekennzeichnet, daß** die wenigstens eine Komponente pulverförmige Trockenmilch ist.

12. Verwendung nach irgendeinem der vorhergehenden Ansprüche, **dadurch gekennzeichnet, daß** die wenigstens eine Komponente(n) den gesamten festen Brennstoff bildet.

13. Verwendung nach irgendeinem der Ansprüche 1 bis 12, **dadurch gekennzeichnet, daß** der Brennstoff in der Luft suspendiert, in einer Konzentration von etwa 200 mg Brennstoff pro Liter Luft verwendet wird.

FIG.1

FIG.2

FIG.3

| Jiamètre de classe (Gauche) μm | 6015-2.$01 Diff. Volume % | 6015-2.$02 Diff. Volume % | Diamètre de classe (Gauche) μm | 6015-2.$01 Diff. Volume % | 6015-2.$02 Diff. Volume % |
|---|---|---|---|---|---|
| 0.429 | 0 | 0 | 28.28 | 0.094 | 0 |
| 0.470 | 0 | 0 | 30.98 | 0.091 | 0 |
| 0.515 | 0 | 0 | 33.94 | 0.087 | 0 |
| 0.564 | 0 | 0 | 37.17 | 0.085 | 0. |
| 0.618 | 0 | 0 | 40.71 | 0.088 | 0 |
| 0.677 | 0 | 0 | 44.60 | 0.096 | 0 |
| 0.741 | 0 | 0 | 48.85 | 0.111 | 0 |
| 0.812 | 0 | 0 | 53.50 | 0.137 | 0.008 |
| 0.889 | 0 | 0 | 58.60 | 0.174 | 0.088 |
| 0.974 | 0 | 0 | 64.19 | 0.214 | 0.194 |
| 1.066 | 0 | 0 | 70.31 | 0.263 | 0.204 |
| 1.168 | 0 | 0 | 77.01 | 0.348 | 0.202 |
| 1.279 | 4.1E-7 | 0 | 84.36 | 0.490 | 0.243 |
| 1.401 | 3.6E-5 | 0 | 92.40 | 0.708 | 0.328 |
| 1.535 | 0.0029 | 0 | 101.2 | 1.04 | 0.508 |
| 1.681 | 0.001 | 0 | 110.8 | 1.52 | 0.861 |
| 1.842 | 0.002 | 0 | 121.4 | 2.14 | 1.34 |
| 2.017 | 0.003 | 0 | 133.0 | 2.84 | 1.85 |
| 2.210 | 0.004 | 0 | 145.6 | 3.56 | 2.37 |
| 2.420 | 0.006 | 0 | 159.5 | 4.25 | 2.93 |
| 2.651 | 0.009 | 0 | 174.7 | 4.84 | 3.47 |
| 2.904 | 0.011 | 0 | 191.4 | 5.29 | 3.93 |
| 3.181 | 0.015 | 0 | 209.6 | 5.58 | 4.33 |
| 3.484 | 0.018 | 0 | 229.6 | 5.71 | 4.68 |
| 3.816 | 0.021 | 0 | 251.5 | 5.70 | 4.96 |
| 4.180 | 0.025 | 0 | 275.5 | 5.60 | 5.17 |
| 4.579 | 0.029 | 0 | 301.8 | 5.47 | 5.37 |
| 5.015 | 0.032 | 0 | 330.5 | 5.34 | 5.59 |
| 5.493 | 0.036 | 0 | 362.0 | 5.19 | 5.75 |
| 6.017 | 0.040 | 0 | 396.6 | 4.94 | 5.81 |
| 6.591 | 0.045 | 0 | 434.4 | 4.59 | 5.77 |
| 7.219 | 0.050 | 0 | 475.8 | 4.14 | 5.59 |
| 7.907 | 0.056 | 0 | 521.1 | 3.64 | 5.28 |
| 8.661 | 0.062 | 0 | 570.8 | 3.24 | 4.91 |
| 9.486 | 0.067 | 0 | 625.2 | 2.87 | 4.37 |
| 10.39 | 0.071 | 0 | 684.8 | 2.70 | 4.32 |
| 11.38 | 0.073 | 0 | 750.1 | 2.77 | 4.82 |
| 12.46 | 0.074 | 0 | 821.6 | 2.66 | 4.76 |
| 13.65 | 0.073 | 0 | 899.9 | | |
| 14.95 | 0.071 | 0 | | | |
| 16.38 | 0.070 | 0 | | | |
| 17.94 | 0.071 | 0 | | | |
| 19.65 | 0.074 | 0 | | | |
| 21.52 | 0.081 | 0 | | | |
| 23.58 | 0.088 | 0 | | | |
| 25.82 | 0.094 | 0 | | | |

## FIG.3Bis

**Volume**

**Diamètre des particules (µm)**

Legend:
- 6015-2.$01 Diff.
- 6015-2.$01 Cum.<
- 6015-2.$02 Diff.
- 6015-2.$02 Cum.<

**FIG.4**

| Diamètre de classe (Gauche) μm | 6015-1.$01 Diff. Volume % | 6015-1.$02 Diff. Volume % | Diamètre de classe (Gauche) μm | 6015-1.$01 Diff. Volume % | 6015-1.$02 Diff. Volume % |
|---|---|---|---|---|---|
| 0.429 | 0 | 0 | 28.28 | 0.205 | 0.207 |
| 0.470 | 0 | 0 | 30.98 | 0.232 | 0.239 |
| 0.515 | 0 | 0 | 33.94 | 0.250 | 0.244 |
| 0.564 | 0 | 0 | 37.17 | 0.262 | 0.244 |
| 0.618 | 0 | 0 | 40.71 | 0.281 | 0.265 |
| 0.677 | 0 | 0 | 44.60 | 0.313 | 0.321 |
| 0.741 | 0 | 0 | 48.85 | 0.362 | 0.400 |
| 0.812 | 0 | 0 | 53.50 | 0.422 | 0.460 |
| 0.889 | 0 | 0 | 58.60 | 0.489 | 0.485 |
| 0.974 | 0 | 0 | 64.19 | 0.570 | 0.526 |
| 1.066 | 0 | 0 | 70.31 | 0.674 | 0.629 |
| 1.168 | 0 | 0 | 77.01 | 0.797 | 0.788 |
| 1.279 | 0 | 0 | 84.36 | 0.934 | 0.973 |
| 1.401 | 0 | 0 | 92.40 | 1.10 | 1.18 |
| 1.535 | 0 | 0 | 101.2 | 1.33 | 1.45 |
| 1.681 | 0 | 0 | 110.8 | 1.64 | 1.77 |
| 1.842 | 0 | 0 | 121.4 | 2.01 | 2.14 |
| 2.017 | 0 | 0 | 133.0 | 2.43 | 2.56 |
| 2.210 | 0 | 0 | 145.6 | 2.93 | 3.06 |
| 2.420 | 0 | 0 | 159.5 | 3.53 | 3.68 |
| 2.651 | 0 | 0 | 174.7 | 4.20 | 4.38 |
| 2.904 | 0 | 0 | 191.4 | 4.89 | 5.11 |
| 3.181 | 0 | 0 | 209.6 | 5.54 | 5.79 |
| 3.484 | 0 | 0 | 229.6 | 6.11 | 6.36 |
| 3.816 | 0 | 0 | 251.5 | 6.54 | 6.72 |
| 4.180 | 0 | 0 | 275.5 | 6.80 | 6.88 |
| 4.579 | 0 | 0 | 301.8 | 6.85 | 6.84 |
| 5.015 | 0 | 0 | 330.5 | 6.70 | 6.61 |
| 5.493 | 0 | 0 | 362.0 | 6.30 | 6.17 |
| 6.017 | 0 | 0 | 396.6 | 5.68 | 5.51 |
| 6.591 | 0 | 0 | 434.4 | 4.90 | 4.68 |
| 7.219 | 0.001 | 0 | 475.8 | 4.04 | 3.79 |
| 7.907 | 0.011 | 0 | 521.1 | 3.19 | 2.92 |
| 8.661 | 0.025 | 0 | 570.8 | 2.39 | 2.14 |
| 9.486 | 0.036 | 0 | 625.2 | 1.68 | 1.47 |
| 10.39 | 0.047 | 0.003 | 684.8 | 1.14 | 0.998 |
| 11.38 | 0.055 | 0.029 | 750.1 | 0.764 | 0.712 |
| 12.46 | 0.062 | 0.061 | 821.6 | 0.513 | 0.536 |
| 13.65 | 0.066 | 0.073 | 899.9 | | |
| 14.95 | 0.069 | 0.076 | | | |
| 16.38 | 0.072 | 0.066 | | | |
| 17.94 | 0.078 | 0.058 | | | |
| 19.65 | 0.091 | 0.057 | | | |
| 21.52 | 0.110 | 0.070 | | | |
| 23.58 | 0.138 | 0.108 | | | |
| 25.82 | 0.172 | 0.158 | | | |

# FIG.4Bis

Remoulages blanc

Legend:
— 00.$05 Diff.
— 00.$05 Cum.
······ 00.$6 Diff.
------- 00.$6 Cum.

Volume %

Diamètre des particules (µm)

FIG.5

EP 1 292 657 B1

| Diamètre de classe (Gauche) µm | 00.905 Diff. Volume % | 00.906 Diff. Volume % | Diamètre de classe (Gauche) µm | 00.905 Diff. Volume % | 00.906 Diff. Volume % |
|---|---|---|---|---|---|
| 0.429 | 0 | 0 | 28.28 | 0.126 | 0.119 |
| 0.470 | 0 | 0 | 30.98 | 0.117 | 0.110 |
| 0.515 | 0 | 0 | 33.94 | 0.111 | 0.103 |
| 0.564 | 0 | 0 | 37.17 | 0.109 | 0.101 |
| 0.618 | 0 | 0 | 40.71 | 0.119 | 0.110 |
| 0.677 | 0 | 0 | 44.60 | 0.143 | 0.135 |
| 0.741 | 0 | 0 | 48.85 | 0.189 | 0.181 |
| 0.812 | 0 | 0 | 53.50 | 0.262 | 0.255 |
| 0.889 | 0 | 0 | 58.60 | 0.379 | 0.372 |
| 0.974 | 0 | 0 | 64.19 | 0.565 | 0.557 |
| 1.066 | 0 | 0 | 70.31 | 0.846 | 0.838 |
| 1.168 | 0 | 0 | 77.01 | 1.24 | 1.23 |
| 1.279 | 0 | 0 | 84.36 | 1.73 | 1.72 |
| 1.401 | 0 | 0 | 92.40 | 2.30 | 2.30 |
| 1.535 | 0 | 0 | 101.2 | 2.92 | 2.92 |
| 1.681 | 0 | 0 | 110.8 | 3.55 | 3.56 |
| 1.842 | 1.6E-6 | 1.3E-6 | 121.4 | 4.13 | 4.13 |
| 2.017 | 4E-5 | 3.2E-5 | 133.0 | 4.62 | 4.62 |
| 2.210 | 0.002 | 0.0016 | 145.6 | 5.02 | 5.02 |
| 2.420 | 0.0049 | 0.0039 | 159.5 | 5.31 | 5.31 |
| 2.651 | 0.001 | 0.001 | 174.7 | 5.50 | 5.51 |
| 2.904 | 0.002 | 0.001 | 191.4 | 5.61 | 5.62 |
| 3.181 | 0.002 | 0.002 | 209.6 | 5.65 | 5.67 |
| 3.484 | 0.004 | 0.003 | 229.6 | 5.62 | 5.66 |
| 3.816 | 0.005 | 0.004 | 251.5 | 5.52 | 5.56 |
| 4.180 | 0.006 | 0.005 | 275.5 | 5.34 | 5.38 |
| 4.579 | 0.008 | 0.007 | 301.8 | 5.06 | 5.10 |
| 5.015 | 0.010 | 0.009 | 330.5 | 4.67 | 4.71 |
| 5.493 | 0.013 | 0.011 | 362.0 | 4.19 | 4.22 |
| 6.017 | 0.016 | 0.013 | 396.6 | 3.65 | 3.67 |
| 6.591 | 0.020 | 0.016 | 434.4 | 3.10 | 3.10 |
| 7.219 | 0.025 | 0.020 | 475.8 | 2.58 | 2.56 |
| 7.907 | 0.031 | 0.026 | 521.1 | 2.10 | 2.08 |
| 8.661 | 0.038 | 0.032 | 570.8 | 1.71 | 1.69 |
| 9.486 | 0.046 | 0.040 | 625.2 | 1.39 | 1.38 |
| 10.39 | 0.056 | 0.048 | 684.8 | 1.17 | 1.17 |
| 11.38 | 0.068 | 0.059 | 750.1 | 1.03 | 1.05 |
| 12.46 | 0.080 | 0.070 | 821.6 | 0.900 | 0.929 |
| 13.65 | 0.093 | 0.082 | 899.9 | | |
| 14.95 | 0.105 | 0.094 | | | |
| 16.38 | 0.117 | 0.106 | | | |
| 17.94 | 0.127 | 0.116 | | | |
| 19.65 | 0.134 | 0.124 | | | |
| 21.52 | 0.138 | 0.129 | | | |
| 23.58 | 0.137 | 0.130 | | | |
| 25.82 | 0.133 | 0.126 | | | |

# FIG.5Bis

FIG.6

| Diamètre de classe (Gauche) µm | 00.$01 Diff. Volume % | 00.$02 Diff. Volume % | Diamètre de classe (Gauche) µm | 00.$01 Diff. Volume % | 00.$02 Diff. Volume % |
|---|---|---|---|---|---|
| 0.429 | 0 | 0 | 28.28 | 0.425 | 0.450 |
| 0.470 | 0 | 0 | 30.98 | 0.434 | 0.451 |
| 0.515 | 0 | 0 | 33.94 | 0.450 | 0.463 |
| 0.564 | 0 | 0 | 37.17 | 0.455 | 0.485 |
| 0.618 | 0 | 0 | 40.71 | 0.468 | 0.520 |
| 0.677 | 0 | 0 | 44.60 | 0.528 | 0.571 |
| 0.741 | 0 | 0 | 48.85 | 0.623 | 0.628 |
| 0.812 | 0 | 0 | 53.50 | 0.672 | 0.672 |
| 0.889 | 0 | 0 | 58.60 | 0.635 | 0.697 |
| 0.974 | 0 | 0 | 64.19 | 0.595 | 0.718 |
| 1.066 | 0 | 0 | 70.31 | 0.646 | 0.757 |
| 1.168 | 0 | 0 | 77.01 | 0.762 | 0.810 |
| 1.279 | 0 | 0 | 84.36 | 0.814 | 0.853 |
| 1.401 | 0 | 0 | 92.40 | 0.760 | 0.877 |
| 1.535 | 0 | 0 | 101.2 | 0.724 | 0.908 |
| 1.681 | 0 | 0 | 110.8 | 0.833 | 0.980 |
| 1.842 | 0 | 0 | 121.4 | 1.07 | 1.11 |
| 2.017 | 0 | 0 | 133.0 | 1.27 | 1.27 |
| 2.210 | 0 | 0 | 145.6 | 1.38 | 1.47 |
| 2.420 | 0 | 0 | 159.5 | 1.57 | 1.71 |
| 2.651 | 0 | 0 | 174.7 | 1.92 | 2.00 |
| 2.904 | 0 | 0 | 191.4 | 2.32 | 2.37 |
| 3.181 | 0 | 0 | 209.6 | 2.76 | 2.84 |
| 3.484 | 0 | 0.001 | 229.6 | 3.35 | 3.45 |
| 3.816 | 0 | 0.006 | 251.5 | 4.17 | 4.23 |
| 4.180 | 0 | 0.013 | 275.5 | 5.13 | 5.13 |
| 4.579 | 0 | 0.017 | 301.8 | 6.09 | 6.06 |
| 5.015 | 0.002 | 0.021 | 330.5 | 6.90 | 6.89 |
| 5.493 | 0.019 | 0.023 | 362.0 | 7.49 | 7.47 |
| 6.017 | 0.041 | 0.025 | 396.6 | 7.77 | 7.65 |
| 6.591 | 0.054 | 0.028 | 434.4 | 7.55 | 7.39 |
| 7.219 | 0.065 | 0.031 | 475.8 | 6.86 | 6.68 |
| 7.907 | 0.072 | 0.036 | 521.1 | 5.85 | 5.65 |
| 8.661 | 0.079 | 0.044 | 570.8 | 4.61 | 4.45 |
| 9.486 | 0.084 | 0.056 | 625.2 | 3.27 | 3.22 |
| 10.39 | 0.094 | 0.074 | 684.8 | 2.26 | 2.23 |
| 11.38 | 0.111 | 0.100 | 750.1 | 1.62 | 1.47 |
| 12.46 | 0.142 | 0.136 | 821.6 | 1.20 | 0.953 |
| 13.65 | 0.190 | 0.183 | 899.9 | | |
| 14.95 | 0.255 | 0.239 | | | |
| 16.38 | 0.331 | 0.301 | | | |
| 17.94 | 0.404 | 0.360 | | | |
| 19.65 | 0.455 | 0.409 | | | |
| 21.52 | 0.474 | 0.442 | | | |
| 23.58 | 0.461 | 0.455 | | | |
| 25.82 | 0.436 | 0.454 | | | |

FIG.6Bis

FIG.7

EP 1 292 657 B1

| Diamètre de classe (Gauche) μm | 00.S03 Diff. Volume % | 00.S04 Diff. Volume % | Diamètre de classe (Gauche) μm | 00.S03 Diff. Volume % | 00.S04 Diff. Volume % |
|---|---|---|---|---|---|
| 0.429 | 0 | 0 | 28.28 | 0.141 | 0.106 |
| 0.470 | 0 | 0 | 30.98 | 0.145 | 0.109 |
| 0.515 | 0 | 0 | 33.94 | 0.147 | 0.113 |
| 0.564 | 0 | 0 | 37.17 | 0.149 | 0.118 |
| 0.618 | 0 | 0 | 40.71 | 0.159 | 0.134 |
| 0.677 | 0 | 0 | 44.60 | 0.196 | 0.175 |
| 0.741 | 0 | 0 | 48.85 | 0.268 | 0.249 |
| 0.812 | 0 | 0 | 53.50 | 0.366 | 0.348 |
| 0.889 | 0 | 0 | 58.60 | 0.481 | 0.468 |
| 0.974 | 0 | 0 | 64.19 | 0.623 | 0.615 |
| 1.066 | 0 | 0 | 70.31 | 0.815 | 0.805 |
| 1.168 | 0 | 0 | 77.01 | 1.06 | 1.05 |
| 1.279 | 0 | 0 | 84.36 | 1.38 | 1.36 |
| 1.401 | 0 | 0 | 92.40 | 1.78 | 1.77 |
| 1.535 | 0 | 0 | 101.2 | 2.30 | 2.31 |
| 1.681 | 0 | 0 | 110.8 | 2.98 | 3.01 |
| 1.842 | 0 | 0 | 121.4 | 3.82 | 3.86 |
| 2.017 | 0 | 0 | 133.0 | 4.77 | 4.84 |
| 2.210 | 0 | 0 | 145.6 | 5.80 | 5.88 |
| 2.420 | 0.0048 | 0.0039 | 159.5 | 6.81 | 6.88 |
| 2.651 | 0.004 | 0.004 | 174.7 | 7.68 | 7.73 |
| 2.904 | 0.010 | 0.008 | 191.4 | 8.27 | 8.29 |
| 3.181 | 0.013 | 0.011 | 209.6 | 8.48 | 8.48 |
| 3.484 | 0.016 | 0.014 | 229.6 | 8.26 | 8.24 |
| 3.816 | 0.018 | 0.016 | 251.5 | 7.64 | 7.61 |
| 4.180 | 0.020 | 0.018 | 275.5 | 6.69 | 6.65 |
| 4.579 | 0.021 | 0.020 | 301.8 | 5.51 | 5.48 |
| 5.015 | 0.022 | 0.021 | 330.5 | 4.25 | 4.24 |
| 5.493 | 0.023 | 0.023 | 362.0 | 3.04 | 3.06 |
| 6.017 | 0.024 | 0.025 | 396.6 | 2.01 | 2.06 |
| 6.591 | 0.026 | 0.027 | 434.4 | 1.21 | 1.27 |
| 7.219 | 0.029 | 0.031 | 475.8 | 0.673 | 0.739 |
| 7.907 | 0.033 | 0.035 | 521.1 | 0.331 | 0.390 |
| 8.661 | 0.038 | 0.041 | 570.8 | 0.099 | 0.124 |
| 9.486 | 0.046 | 0.048 | 625.2 | 0.007 | 0.009 |
| 10.39 | 0.056 | 0.057 | 684.8 | 0 | 0 |
| 11.38 | 0.069 | 0.068 | 750.1 | 0 | 0 |
| 12.46 | 0.085 | 0.079 | 821.6 | 0 | 0 |
| 13.65 | 0.103 | 0.092 | 899.9 | | |
| 14.95 | 0.122 | 0.104 | | | |
| 16.38 | 0.138 | 0.114 | | | |
| 17.94 | 0.150 | 0.120 | | | |
| 19.65 | 0.154 | 0.121 | | | |
| 21.52 | 0.152 | 0.117 | | | |
| 23.58 | 0.146 | 0.111 | | | |
| 25.82 | 0.141 | 0.106 | | | |

# FIG.7Bis

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. CARDILLO et al.** Dust explosions in the food industry. *Industria Conserve,* 1998, vol. 73 (2), 135-144
- **WASMUND et al.** *Zuckerindustrie,* 1978, vol. 103 (10), 856-860
- **CHINYERE et al.** *Carbohydrate polymers,* 1998, vol. 37, 97-101
- **K. SAITO et al.** *le journal of texture studies,* 1999, vol. 30, 59-88